Europäisches Patentamt

European Patent Office

Office européen des brevets

(19)

(11) **EP 1 005 136 B1**

(12) **EUROPÄISCHE PATENTSCHRIFT**

(45) Veröffentlichungstag und Bekanntmachung des Hinweises auf die Patenterteilung:
**22.01.2003 Patentblatt 2003/04**

(51) Int Cl.⁷: **H02K 1/27**, H02K 21/12

(21) Anmeldenummer: **99890367.8**

(22) Anmeldetag: **15.11.1999**

(54) **Ein- oder mehrphasige Transversalflussmaschine**

One-phase or multiphase transversal flux machine

Machine à flux transversal à une ou plusieurs phases

(84) Benannte Vertragsstaaten:
**AT BE CH CY DE DK ES FI FR GB GR IE IT LI LU MC NL PT SE**

(30) Priorität: **27.11.1998 AT 199898**

(43) Veröffentlichungstag der Anmeldung:
**31.05.2000 Patentblatt 2000/22**

(73) Patentinhaber: **Bombardier Transportation GmbH**
**13627 Berlin (DE)**

(72) Erfinder:
• **Henneberger, Gerhard**
**52074 Aachen (DE)**
• **Blissenbach, Rolf**
**52006 Aachen (DE)**
• **Schäfer, Uwe**
**16761 Hennigsdorf (DE)**
• **Güntensperger, Walter**
**8426 Lufingen (CH)**
• **Hackmann, Wilhelm**
**2371 Hinterbrühl (AT)**
• **Stockmayer, Michael**
**2700 Wiener Neustadt (AT)**
• **Neudorfer, Harald**
**2514 Traiskirchen (AT)**

(74) Vertreter: **Sonn, Helmut et al**
**Patentanwälte**
**Sonn, Pawloy, Weinzinger & Köhler-Pavlik**
**Riemergasse 14**
**1010 Wien (AT)**

(56) Entgegenhaltungen:
EP-A- 0 762 618         DE-A- 3 602 687
DE-A- 4 300 440         DE-A- 19 714 895
US-A- 5 633 551

## Beschreibung

Die Erfindung betrifft eine ein- oder mehrphasige Transversalflußmaschine mit am Rotor in Umfangsrichtung angeordneten Permanentmagneten in einer Anzahl entsprechend der Polzahl der Maschine mit allenfalls zwischen den Permanentmagneten angeordneten Flußleitstücken, und mit am Stator in Umfangsrichtung aufeinanderfolgend angeordneten U-Jochen.

Mit Transversalflußmaschinen ist es möglich, gegenüber herkömmlichen Maschinen gleichen Bauvolumens eine wesentlich höhere Drehmomentdichte zu erzielen. Dies rührt daher, daß im Gegensatz zu Asynchronmaschinen bei Transversalflußmaschinen eine Erhöhung des Drehmomentes durch Erhöhung der Polzahl erreicht werden kann. Bei den Transversalflußmaschinen ist der magnetische Fluß im Gegensatz zu herkömmlichen elektrischen Maschinen nicht longitudinal sondern transversal gerichtet. Je nach Konstruktion unterscheidet man zwischen einseitigen Transversalflußmaschinen, wo nur auf einer Seite der Permanentmagnete die wicklungsumschließenden U-Joche zum Führen des magnetischen Flusses angeordnet sind und zweiseitige Transversalflußmaschinen, wo beiderseits der Permanentmagnete U-Joche angeordnet sind. In beiden Anordnungen können zwischen je zwei U-Jochen I-Joche zur Rückführung der Flüsse eingesetzt werden.

Eine einseitige Transversalflußmaschine wird beispielsweise in der DE 197 14 895 A1 beschrieben, wo durch eine spezielle Ausgestaltung der U-förmigen und I-förmigen Joche die Streuwege reduziert wurden, sodaß der Drehschub gesteigert werden konnte. Eine andere Ausführungsform einer Transversalflußmaschine, welche fertigungstechnisch einfacher herstellbar ist und zugleich einen möglichst hohen Wirkungsgrad sowie ein möglichst hohes Drehmoment besitzt, ist auch aus der AT ... ... B (A 372/98) bekannt.

Bei Transversalflußmaschinen sind am Rotor entlang des Umfangs Permanentmagnete in einer Anzahl entsprechend der Polzahl der Maschine angeordnet. Am Stator der Maschine sind sogenannte U-Joche aus magnetisch gut leitendem Material, beispielsweise aus lamelliertem Eisen, angeordnet, über welche der magnetische Fluß geführt wird. Auf der gegenüberliegenden Seite jedes Pols bzw. Schenkels jedes U-Joches befindet sich ein Permanentmagnet am Rotor. Je nach Ausführungsform der Maschine werden die magnetischen Feldlinien entweder über Rückschlußringe, welche eine Reihe von Permanentmagneten magnetisch kurzschließen oder sogenannte Flußleitstücke aus magnetisch gut leitfähigem Material, welche zwischen den Permanentmagneten angeordnet sind, erreicht. Im erstgenannten Fall werden die in Umfangrichtung abwechselnd magnetisierten Permanentmagnete magnetisch in radialer Richtung durchflossen, man spricht von sogenannten "Oberflächenmagneten", während im zweiten Fall die in Umfangrichtung abwechselnd magnetisierten Permanentmagnete tangential durchflossen werden. Diese Art der Maschinen wird mit dem Begriff "Flußkonzentration" bezeichnet, da in diesem Fall aufgrund der Flußleitstücke eine Konzentration des magnetischen Flusses möglich ist. Die vorliegende Erfindung bezieht sich auf beide Arten von Transversalflußmaschinen, wobei nachfolgend im wesentlichen nur auf die Konstruktion mit Flußkonzentration eingegangen wird.

Die DE 43 00 440 A1 zeigt eine Transversalflußmaschine, bei der die Statorelemente so geformt sind, daß ihre am Luftspalt liegenden Pole um eine Polteilung in Bewegungsrichtung verschoben sind. Die Kröpfung der U-Joche zur Erzielung der Verschiebung der Pole gegeneinander ist in der Herstellung jedoch relativ aufwendig.

Die EP 0 762 618 A1 zeigt eine Permanentmagnet erregte elektrische Maschine, bei der die statorseitig angeordneten C-förmigen Joche versetzt angeordnet sind, so daß der vom zweitbenachbarten Permanentmagneten ausgehende magnetische Fluß geschlossen werden kann. Die Bauweise dieser Maschine unterscheidet sich von jener der vorliegenden Anmeldung dadurch, daß jeweils nur eine Reihe von Permanentmagneten und Flußleitstücken jeweils einer Reihe von C-Jochen zugeordnet sind.

Erkauft wird das höhere Drehmoment bei Transversalflußmaschinen durch eine Konstruktion, welche aus sehr vielen Einzelteilen besteht. Durch die leicht herstellbaren Ringwicklungen und der möglichen automatisierbaren Montage der vielen Einzelteile überwiegen aber die Vorteile.

Die Aufgabe der vorliegenden Erfindung besteht darin, das Drehmoment der Transversalflußmaschine gegenüber bekannten Konstruktionen weiter zu steigern, wobei gleichzeitig die Konstruktion möglichst nicht komplizierter und teurer werden soll.

Gelöst wird die erfindungsgemäße Aufgabe dadurch, daß die Permanentmagnete und die allfälligen Flußleitstücke gegenüber einer zur Drehachse der Maschine parallelen Richtung versetzt orientiert sind, sodaß aufgrund der magnetischen Potentialdifferenz ein drehmomentbildender, magnetischer Fluß resultiert. Aufgrund der erfindungsgemäßen Versetzung der Permanentmagnete und der allfälligen Flußleitstücke können die üblicherweise verwendeten I-Joche zur Schließung des magnetischen Flusses entfallen. Dadurch ist es möglich, die U-Joche parallel zur Drehachse auszurichten und keine herstellungstechnisch aufwendigen, gekröpften U-Joche einzusetzen, während die Permanentmagnete und allfälligen Flußleitstücke gegenüber einer Parallelen der Drehachse versetzt angeordnet werden. Durch den Wegfall der I-Joche ist folglich weniger Eisenmaterial vorhanden, wodurch die Eisenverluste insgesamt geringer werden und somit das resultierende Drehmoment der Maschine gegenüber herkömmlichen Transversalflußmaschinen gleicher Baugröße erhöht werden kann. Darüber hinaus ist durch den Wegfall der I-Joche die Anzahl der Einzelteile im Stator der Transversalflußmaschine reduziert und die Konstruktion einfacher.

Zusätzlich zu der Versetzung der Permanentmagnete und allfälligen Flußleitstücke können auch die U-Joche gegenüber einer zur Drehachse der Maschine parallelen Richtung versetzt orientiert sein. Allerdings wird die gekröpfte Anordnung der U-Joche durch eine kompliziertere Konstruktion und Herstellung erkauft. Allerdings ist insbesondere bei hohen Stückzahlen auch die Kröpfung durch automatisiert hergestellte Einzelteile kein Faktor, der zu höheren Herstellungskosten der Maschine führt.

Vorteilhafterweise sind die U-Joche und die Permanentmagnete sowie allfälligen Flüßleitstücke zueinander im wesentlichen um eine Polteilung oder ungeradzahlige Vielfache der Polteilung versetzt. Dadurch entsteht das maximal erzielbare Drehmoment, da die maximale magnetische Potentialdifferenz zur Erzeugung des drehmomentbildenden magnetischen Flusses ausgenützt wird. Im Fall der Versetzung um eine Polteilung bzw. ungeradzahlige Vielfache davon ist die drehmomentbildende Kraft auch im wesentlichen drehrichtungsunabhängig. Es kann für bestimmte Konstruktionen von Vorteil sein eine Drehrichtungsabhängigkeit zu erzielen, wodurch geringe Abweichungen von der Versetzung um genau eine Polteilung bzw. ungeradzahlige Vielfache davon möglich sind. In einem solchen Fall wird das erreichte Drehmoment jedoch gegenüber dem maximal möglichen reduziert sein. Die Polteilung $\tau_p$ ist definiert durch das Verhältnis des wirksamen Umfanges zwischen Rotor und Stator zur Polzahl 2p der Maschine. Der Polbedeckungstaktor $\alpha$ ist durch das Verhältnis der Breite der Permanentmagnete zur Polteilung $\tau_p$ definiert.

Gemäß einem weiteren Merkmal der Erfindung ist vorgesehen, daß die mit dem Stator verbundene Seite der U-Joche parallel zur Drehachse orientiert ist, und daß zumindest ein Schenkel der U-Joche gegenüber dem oder den anderen Schenkel versetzt ist. Diese Maßnahme bringt herstellungstechnische Vorteile. Dadurch können herkömmliche Statoren von Transversalflußmaschinen in unveränderter Weise eingesetzt werden, während lediglich die U-Joche anders ausgebildet sein müssen. Die parallel zur Drehachse ausgebildete Seite der U-Joche wird in die Nuten eines U-Jochträgers eingesteckt. Drehachsparallele Nuten am U-Jochträger zur Aufnahme der U-Joche sind wesentlich leichter herzustellen als schräg angeordnete Nuten.

Die Schrägung der Schenkel der U-Joche wird dabei vorteilhafterweise durch Biegen hergestellt. Diese Herstellungsmethode weist insbesondere bei der Konstruktion der U-Joche in Form von lamellierten Blechen einen Vorteil auf. Ebenso können die U-Joche auch durch Pressen oder Sintern hergestellt werden. Im Falle eines geeigneten Materials oder der Mischung magnetischen Materials mit Kunststoff ist auch ein gußtechnisches Herstellen denkbar. Möglich ist auch ein Gießen einer Mischung von Magnetwerkstoff mit Kunststoff, wobei die magnetische Leitfähigkeit dieser Materialmischung gegenüber einem reinen magnetischen Werkstoff allerdings verringert ist.

Zur Steigerung des Drehmomentes ist vorgesehen, daß die Pole der U-Joche verbreitert als Polschuhe ausgeführt sind. Durch diese Verbreiterung wird die drehmomentwirksame Oberfläche vergrößert und die Flußdichte im Luftspalt verringert. Als Nachteil davon sei zu erwähnen, daß der freibleibende Spalt zum Einlegen der Ringwicklung reduziert wird, wodurch das Belegen mit der Ringwicklung wesentlich erschwert wird. Im Gegensatz zu nicht verbreiterten Schenkeln des U-Joches, wo die Ringwicklung in Form eines Flachbandes einfach belegt werden kann, ist im Falle der Anwendung von Polschuhen nur eine sogenannte "Träufelwicklung" möglich, wo die Wicklung nicht aus einem Band, sondern aus mehreren Einzeldrähten bestehen muß und deren Anordnung entsprechend aufwendiger ist.

Zur Vermeidung des oben genannten Nachteiles ist gemäß einem weiteren Merkmal der Erfindung vorgesehen, daß die U-Joche aus Einzelteilen aufgebaut sind. Dadurch wird ein sukzessiver Aufbau der Transversalflußmaschine mit einfach vorgefertigten Ringspulen möglich und kann eine "Träufelwicklung" vermieden werden.

Vorteilhafterweise weisen die Einzelteile der U-Joche an ihren Berührungsflächen komplementäre, formschlüssige Ausbildungen auf. Dadurch wird eine radiale Verschiebung der Einzelteile zueinander verhindert bzw. erschwert.

Gemäß einem weiteren Merkmal der Erfindung kann jeder, einem U-Joch gegenüberliegende Permanentmagnet mehrstückig ausgebildet sein, allenfalls mit einem zwischen dem bzw. den Teilen des Permanentmagnets angeordneten Zwischenraum, welcher dem Wickelfensterzwischen den Polen der U-Joche gegenüberliegt. Eine mehrteilige Anordnung der Permanentmagnete bringt eine Kostenersparnis mit sich, da mehrere kleine Permanentmagnete wesentlich billiger sind als ein größerer Permanentmagnet. Ein Zwischenraum zwischen den Permanentmagneten, der gegenüber dem Zwischenraum zwischen den Polen des U-Joches angeordnet ist, ist prinzipiell möglich, um das Magnetmaterial in diesem Bereich einzusparen.

Gemäß einem weiteren Konstruktionsmerkmal der Erfindung vor allem bei der Ausführungsform mit ungeschrägten Statorjochen ist vorgesehen, daß die Flußleitstücke durch zwei in Richtung der Drehachse orientierte Endstücke, welche durch ein schräges Mittelstück miteinander verbunden sind, ausgebildet sind. Dadurch resultiert ein im wesentlichen S-förmiges Flußleitstück, welches beispielsweise einfach durch Pressen bzw. Sintern herstellbar ist. Die zwischen den Flußleitstücken angeordneten Permanentmagnete hingegen können aus billigen, quaderförmigen Einzelteilen bestehen.

Gemäß einer vorteilhaften Ausführungsform der Maschine ist vorgesehen, daß im Falle einer mehrphasigen (Phasenzahl m ≥ 3) Transversalflußmaschine die Permanentmagnete und allfälligen Flußleitstücke einer Phase gegenüber der nächsten Phase um $\tau_p$/m verschoben sind, und daß die Mittelschenkel der U-Joche eine Breite aufweisen, die um den Faktor $2 \cdot \sin(\frac{180°}{m})$ breiter ist, als die Breite der außenliegenden Schenkel der U-Joche. Durch diese Phasenverschiebung kann die Breite der Mittelschenkel gegenüber der zweifachen Breite der außenliegenden Schenkel der U-Joche verkürzt werden und somit das Bauvolumen reduziert werden. Beispielsweise beträgt die Breite der Mittelschenkel der U-Joche bei einer dreiphasigen (m=3) Maschine $\sqrt{3}$ = 1,73 anstelle von 2 bei der Aneinanderreihung dreier U-Joche.

Vorteile ergeben sich, wenn die U-Joche und allfälligen Flußleitstücke aus weichmagnetische Verbundwerkstoffen hergestellt sind, da diese in Bezug auf die elektrische und magnetische Leitfähigkeit isotrope Eigenschaften, d.h. in alle Richtungen gleiche Eigenschaften aufweisen. Damit sind dreidimensionale Flußführungen möglich, welche bei Anordnungen mit lamelliertem Eisen aufgrund der sehr hohen Wirbelstromverluste bei Induktionen senkrecht zur Blechebene sehr ungünstig sind.

Wenn die U-Joche und allfälligen Flußleitstücke als Schnittbandkern hergestellt sind, resultieren einerseits herstellungstechnische Vorteile, da die U-Joche und Flußleitstücke gleichzeitig durch Aufwickeln eines bandfömigen Materials und anschließendes Zerschneiden hergestellt werden können. Andererseits sind auch optimale magnetische Eigenschaften die Folge, da die durch die Textur des Bleches bestimmte magnetische Vorzugsrichtung immer mit der gewünschten Richtung des magnetischen Flusses übereinstimmt und durch die Richtung der Lamellierung die Verluste reduziert werden.

Weitere Merkmale der Erfindung werden anhand der beiliegenden Abbildungen, welche verschiedene Ausführungsformen der Erfindung zeigen, näher erläutert.

Darin zeigen

| | |
|---|---|
| Fig. 1a - 1h | schematisch Teile verschiedener Transversalflußmaschinen zur Erläuterung der Entwicklung der vorliegenden Erfindung, |
| Fig. 2a | eine Ausführungsform der Erfindung mit abgeschrägten U-Jochen in perspektivischer Ansicht, |
| Fig. 2b und Fig. 2c | eine Draufsicht sowie Seitenansicht der Anordnung gemäß Fig. 2a, |
| Fig. 3a | eine Variante der Erfindung mit versetzt angeordneten Flußleitstücken in perspektivischer Ansicht, |
| Fig. 3b und Fig. 3c | eine Draufsicht und Seitenansicht der Anordnung gemäß Fig. 3a, |
| Fig. 4a - 4c | verschiedene Varianten der U-Joche für eine dreiphasige Transversalflußmaschine, |
| Fig. 5a - 5c | verschiedene Ausführungsformen schräg angeordneter Permanentmagnete und bzw. oder allfälliger Flußleitstücke, |
| Fig. 6a - 6c | zwei Varianten von U-Jochen in Seitenansicht, |
| Fig. 7a - 7d | Schema der Herstellung eines U-Jochs und Flußleitstückes als Schnittbandkern, und |
| Fig. 8a - 8c | Möglichkeiten der Gestaltung der U-Joche einer dreiphasigen Maschine. |

Die nachfolgenden Darstellungen beziehen sich ausschließlich auf einseitige Transversalflußmaschinen, welche als Außenläufer ausgebildet sind. In diesem Fall ist der drehbare Teil der Maschine, der Rotor, außen angeordnet, während der feststehende Teil der Maschine, der Stator, innen angeordnet ist. Eine solche Ausführungsform findet beispielsweise bei Direktantrieben von Schienenfahrzeugen eine Anwendung. Allerdings ist zu bemerken, daß die Erfindung auch für Transversalflußmaschinen, welche als Innenläufer ausgebildet sind sowie für zweiseitige Transversalflußmaschinen anwendbar ist.

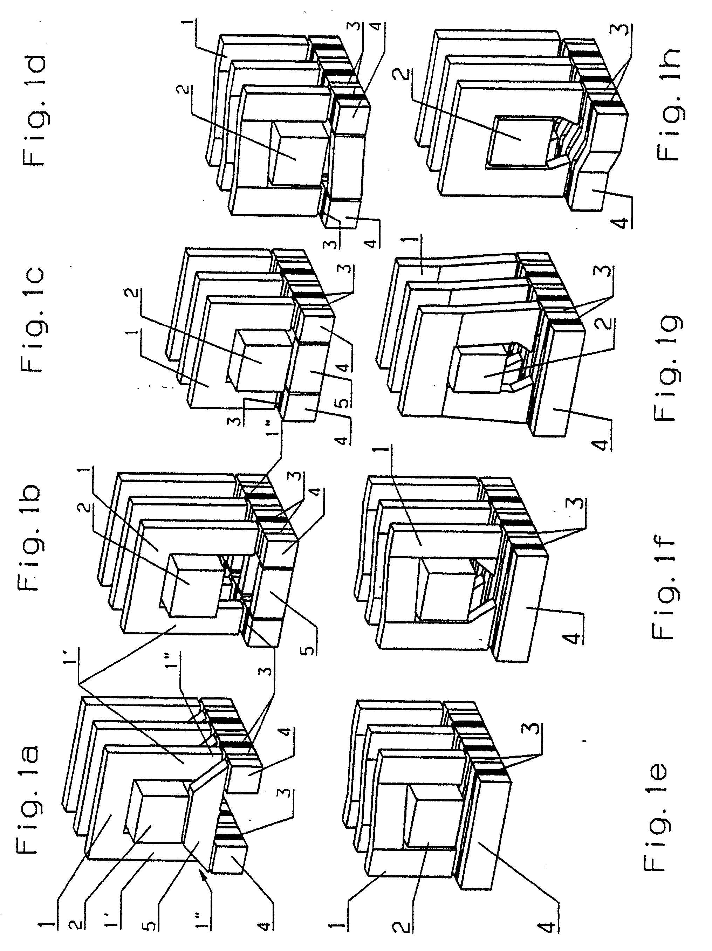

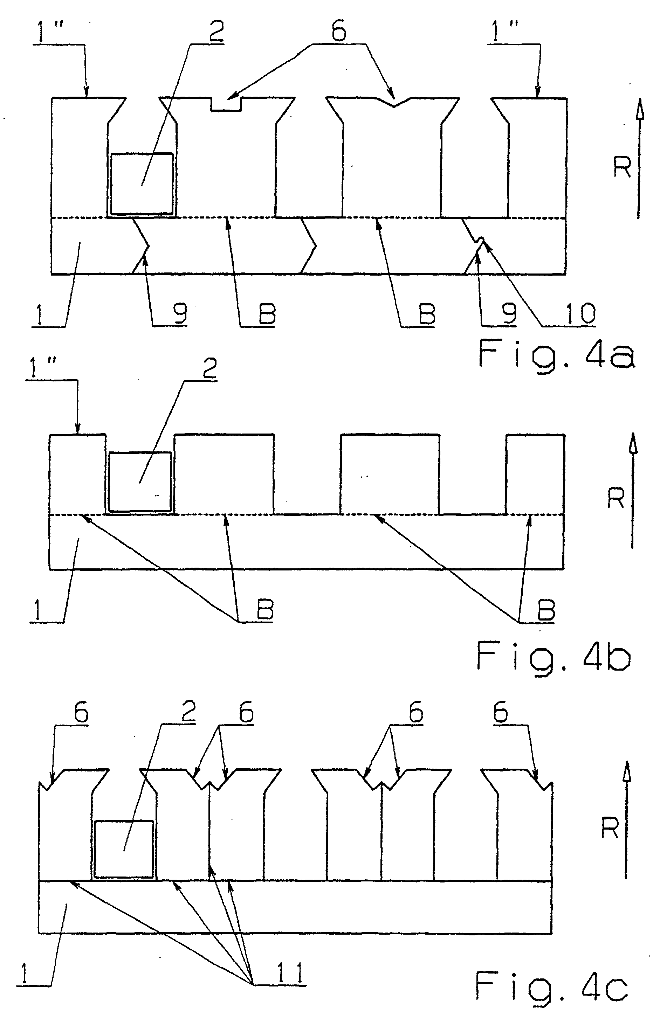

Die Fig. 1a - 1h dienen zur Erläuterung der Gedankenschritte, welche zur vorliegenden Erfindung geführt haben. Bei der Ausführungsform gemäß Fig. 1a handelt es sich um eine bekannte Transversalflußmaschine, bei der am Stator U-Joche 1 angeordnet sind, die beispielsweise aus lamelliertem Eisen aufgebaut sein können. Die U-Joche 1 umschließen die Ringwicklung 2 der Transversalflußmaschine. Der in der Ringwicklung 2 fließende Wechselstrom ruft einen magnetischen Fluß $\Phi$ hervor, der von einem Pol 1'' des U-Jochs 1 über den Luftspalt zu den am Rotor angeordneten Flußleitstück 4, über die Permanentmagnete 3 und über die Flußleitstücke 4 wieder über den Luftspalt zu den I-Jochen 5 gelangt und über die Flußleitstücke 4 und Permanentmagneten 3 der zweiten Reihe von Permanentmagneten und Flußleitstücken 4 wieder zum zweiten Pol 1'' des U-Joches 1 gelangt. Der magnetische Fluß $\Phi$ ruft ein Drehmoment hervor, welches zur Drehung der Transversalflußmaschine führt. Die Ausführungsform gemäß Fig. 1b hat die sogenannten I-Joche 5 zwischen den Reihen von Permanentmagneten 3 und Flußleitstücken 4 angeordnet, wodurch die Streuung zwischen U-und I-Jochen fast völlig wegfällt, allerdings eine deutlich schwierigere Fertigung resultiert und radiale und axiale Luftspalte auftreten. Ein weiterer Vorteil der Bauform gemäß Fig. 1b liegt darin, daß in dem zwischen den Schenkeln 1' der U-Joche 1 liegenden Fenster eine größere Ringwicklung 2 angeordnet werden kann bzw. der Bauraum bei gleich großer Ringwicklung 2 reduziert werden kann, resultierend in der Variante gemäß Fig. 1c. Bei dem Gedankenmodell gemäß Fig. 1d wurden die U-Joche 1 und die I-Joche 5 um genau eine Polteilung $\tau_p$ schräg versetzt angeordnet. Daraus resultiert, daß die gegenüberliegenden Permanentmagnete 3 der beiden Rotorringe zum Erzielen einer magnetischen Potentialdifferenz nicht mehr unterschiedlich magnetisiert sein müssen, welche zum magnetischen Fluß $\Phi$ im U-Joch 1 führt, sondern daß die gegenüberliegenden Permanentmagnete 3 der Rotorringe gleich magnetisiert sind. Dadurch ist es möglich, zur Konstruktionsvariante gemäß Fig. le zu gelangen, welche im wesentlichen die Erfindung bzw. eine Ausführungsform davon darstellt. In diesem Fall sind die Permanentmagnete 3 und die Flußleitstücke 4 durchgehend angeordnet, d.h. es wird pro Phase der Maschine nur mehr eine Reihe von Flußleitstücken 4 und abwechselnd magnetisierten Permanentmagneten 3 benötigt, wobei die statorfesten I-Joche 5 entfallen. Im dargestellten Fall ist eine einphasige Maschine dargestellt, es gilt analog zu mehrphasigen Maschinen. Durch die entsprechende Schrägung der U-Joche 1 wird erreicht, daß die Pole 1" der U-Joche 1 über unterschiedlichen magnetischen Potentialen zu liegen kommen, wodurch ein magnetischer Fluß $\Phi$ resultiert. Durch das Weglassen der I-Joche 5 wird der Eisenanteil der Transversalflußmaschine und somit die Eisenverluste reduziert, resultierend in einem höheren Drehmoment der Maschine. In Fig. 1f ist eine Variante der erfindungsgemäßen Konstruktion dargestellt, bei der zur Erhöhung der drehmomentwirksamen Oberfläche die Pole 1" der U-Joche 1 in Form von Polschuhen auseinanderlaufen. Man nimmt das erhöhte Drehmoment jedoch mit einer gegenüber der Variante gemäß Fig. le vergrößerten Bauform in Kauf. Das Fenster, in welchem die Ringwicklung 2 zwischen den Schenkeln 1' der U-Joche 1 liegt, muß nämlich wegen der verbreiterten Pole 1" vergrößert sein. Darüber hinaus ist bei dieser Variante gemäß Fig. 1f das Wickeln der Ringwicklung 2 erschwert, da der Raum zum Belegen der Ringwicklung 2 reduziert ist, wodurch nur eine sogenannte "Träufelwicklung" und keine Wicklung eines bandförmigen Materials möglich ist. Als Abhilfe dazu können allerdings die U-Joche 1 geteilt ausgeführt werden und somit auch vorgefertigte Ringwicklungen 2 beim Zusammenbau der Transversalflußmaschine eingelegt werden (siehe Fig. 4a - 4c). Fig. 1g zeigt eine Variante der Erfindung, bei der nicht die gesamten U-Joche 1 schräg ausgeführt sind, sondern nur die Schenkel 1' der U-Joche 1 gegeneinander verbogen sind. Diese Variante zeigt herstellungstechnisch wesentliche Vorteile, da herkömmliche U-Joch-Träger mit geraden Nuten zum Einstecken der U-Joche 1 verwendet werden können. In Fig. 1h ist eine Variante der Erfindung wiedergegeben, bei der die U-Joche 1 gerade und die Flußleitstücke 4 schräg ausgeführt sind. Die speziell geformten Flußleitstücke 4 können beispielsweise durch Pressen oder Sintern einfach und kostengünstig hergestellt werden. Zwischen zwei Flußleitstücken 4 sind jeweils zwei quaderförmige Permanentmagnete 3 gleicher Magnetisierungsrichtung, die noch weiter geteilt werden können, angeordnet.

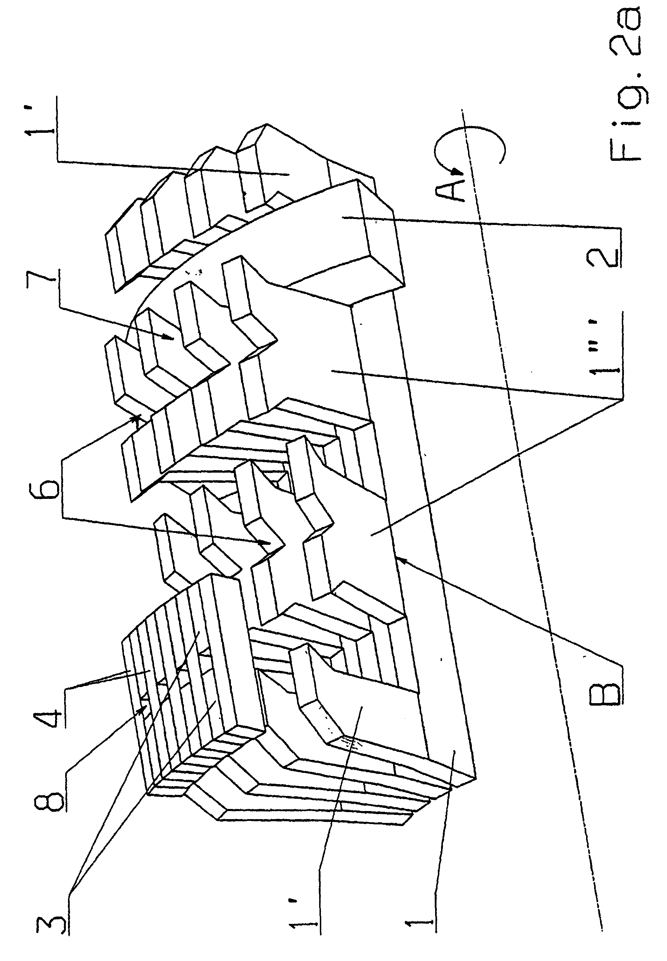

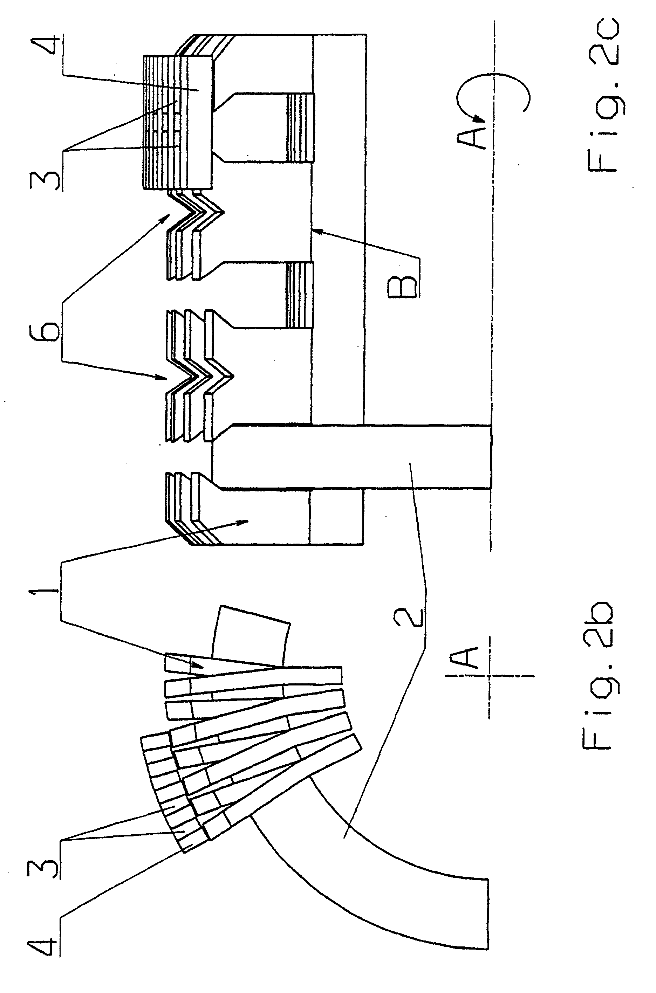

Die Fig. 2a - 2c zeigen eine Ausführungsform der Erfindung, bei der die U-Joche 1 mit schräg angeordneten Schenkel ausgebildet sind. Das Beispiel zeigt eine als Außenläufer ausgebildete, dreiphasige Transversalflußmaschine. Um die Drehachse A sind auf einem U-Jochträger (nicht dargestellt) des Stators die U-Joche 1 angeordnet, welche so ausgebildet sind, daß sie in Nuten am U-Jochträger (nicht dargestellt) passen, die parallel zur Drehachse A angeordnet sind. Jeder Schenkel 1', 1''' jedes U-Jochs 1 ist um die halbe Polteilung ($\tau_p/2$) schräg versetzt angeordnet, sodaß sich zwischen den Schenkeln 1', 1''' eines U-Jochs 1 eine Versetzung von einer Polteilung $\tau_p$ ergibt (siehe Fig. 2b). Dadurch wird der erfindungsgemäße Verlauf des magnetischen Flusses $\Phi$ über die Permanentmagnete 3 und Flußleitstücke 4, welche am Rotor angeordnet sind, erzielt. Im dargestellten Beispiel ist nur eine Ringwicklung 2 schematisch dargestellt. Im Falle des Aufbaus der U-Joche 1 aus lamellierten Eisenblechen kann die Herstellung in einfacher Weise durch Biegen um eine Biegelinie B erfolgen. Über die Nuten 6 an den Schenkeln der U-Joche 1 kann die Gesamtanordnung durch Bandagieren befestigt werden. Die auftretenden Hohlräume 7 zwischen den U-Jochen 1 können durch keilförmig ausgebildete Formkörper (nicht dargestellt), beispielsweise aus vulkanisiertem Gummi, ausgefüllt werden, wodurch die Stabilität der Maschine erhöht und die Schwingungsneigung reduziert werden kann. Die Ausfüllung dieser Hohlräume 7 sowie anderer Zwischenräume kann auch durch Vergießen mit geeigneter Vergußmasse geschehen. Die Permanentmagnete 3 sind im dargestellten Beispiel unter Bildung eines Zwischenraumes 8 zweireihig angeordnet, wodurch die Kosten für die Permanentmagnete 3 reduziert werden können. Die Permanentmagnete 3 jeder Reihe können wiederum geteilt werden.

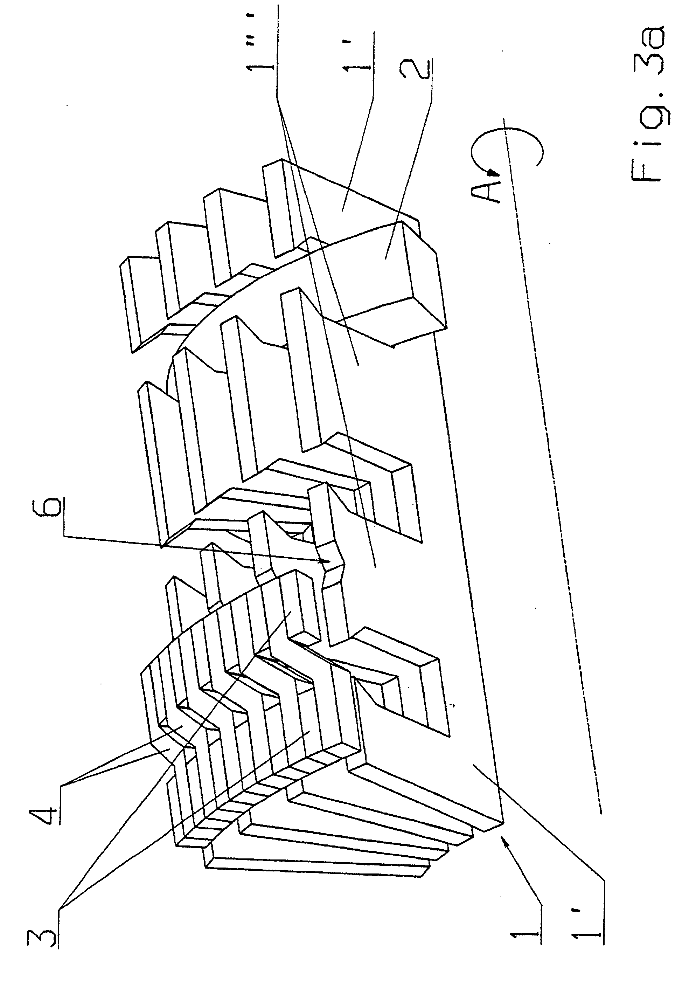

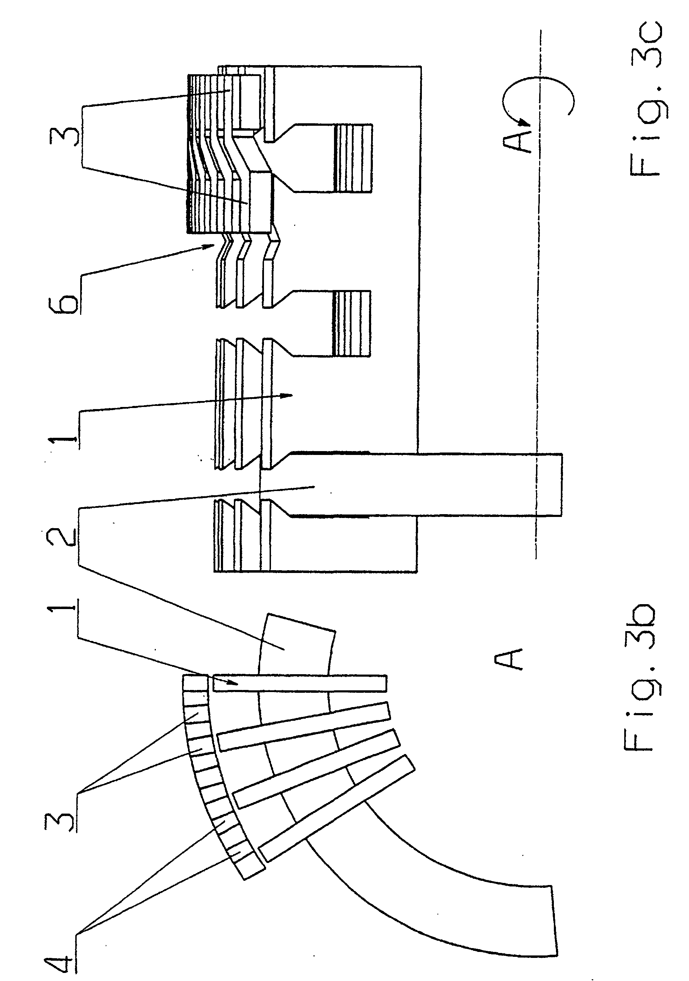

Die Variante gemäß Fig. 3a bis 3c weist eine Ausführungsform auf, wonach die U-Joche 1 eben und parallel zur Drehachse A ausgeführt sind, wohingegen die Flußleitstücke 4 versetzt angeordnet sind. Dabei ist gemäß der dargestellten Ausführungsform die Gestalt der Flußleitstücke 4 so gewählt, daß die dazwischen liegenden Permanentmagnete 3 quaderförmig ausgebildet sein können. Der Vorteil dieser Ausführungsvariante liegt darin, daß einfachere vorhandene Fertigungstechnologien verwendet werden können und keine aufwendigen Konstruktionsänderungen vorgenommen werden müssen.

Die Fig. 4a bis 4c zeigen verschiedene Ausführungsvarianten der U-Joche 1 mit Kröpfung gemäß der Ausführungsform gemäß Fig. 2a bis 2c. Gemäß Fig. 4a ist das U-Joch für eine dreiphasige Maschine so ausgebildet, daß es aus insgesamt vier Einzelteilen besteht, welche über formschlüssige Verbindungen 9 miteinander verbunden sind. Diese Teilung der U-Joche 1 hat insbesondere bei der Ausbildung der Pole 1" der U-Joche 1 in Form von Polschuhen den Vorteil, daß die vorgefertigten Ringwicklungen 2 beim Zusammenbau der Maschine eingelegt werden können, und nicht die Ringwicklung 2 in aufwendiger Weise in Form einer "Träufelwicklung" durch den schmalen Spalt zwischen den Schenkeln der U-Joche 1 eingelegt werden müssen. Bei der Verbindung von Einzelteilen der U-Joche 1 können auch Ausformungen 10 in Form von Widerhaken od. dgl. vorgesehen sein, wodurch eine bessere Fixierung der Einzelteile zueinander und eine Sicherung in radialer Richtung R gegeben ist. An den Schenkeln 1' der U-Joche 1 sind Nuten 6 dargestellt, welche zum Bandagieren der Gesamtanordnung über Bänder od. dgl. dienen. Die Nuten 6 können beispielsweise dreieckige oder rechteckige Querschnittsform besitzen. Die Biegelinien B, um welche die Schenkel erfindungsgemäß um die Polteilung $\tau_p$ bzw. ungeradzahlige, ganzzahlige Vielfache davon versetzt werden, ist strichliert angedeutet. Bei der Ausführungsform gemäß Fig. 4b sind die Pole 1" der U-Joche 1 nicht vergrößert ausgebildet, wodurch die Baugröße reduziert werden kann oder die Ringwicklung 2 zwischen den Schenkeln der U-Joche 1 größer ausgeführt werden kann. Die Variante gemäß Fig. 4c zeigt ein U-Joch 1 für eine dreiphasige Transversalflußmaschine, welche so geteilt ist, daß das gesamte U-Joch 1 aus lediglich zwei verschiedenen Einzelteilen aufgebaut ist. Die Trennung zwischen den Einzelteilen des U-Joches 1 ist durch die Trennlinien 11 verdeutlicht.

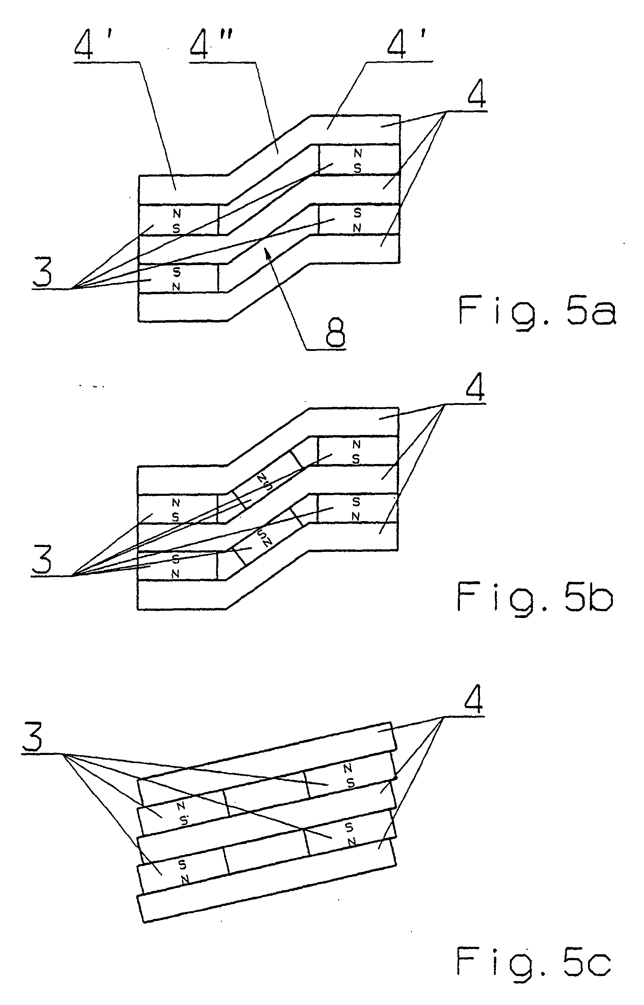

In den Fig. 5a bis 5c sind verschiedene Ausführungsformen der schräg angeordneten Flußleitstücke 4 und/ oder Permanentmagnete 3 gemäß der Ausführungsvariante der erfindungsgemäßen Transversalflußmaschine gemäß Fig. 3a bis 3c wiedergegeben. In Fig. 5a sind die Flußleitstücke 4 so angeordnet, daß deren Endstücke 4' parallel zur Drehachse A orientiert sind und durch ein Mittelstück 4" miteinander verbunden sind. Die Flußleitstücke 4 können in dieser S-förmigen Gestalt leicht durch Pressen oder Sintern hergestellt werden. Eine ähnliche Ausführung der Permanentmagnete 3, wie die Flußleitstücke 4, wäre sehr aufwendig und teuer, weshalb die Permanentmagnete 3 geteilt werden und in Form zweier quaderförmiger Permanentmagnete, die in Reihen zwischen den Flußleitstücken 4 angeordnet werden. Der Zwischenraum 8 zwischen den Teilen der Permanentmagnete 3 kann aus Einsparungsgründen frei gelassen werden bzw. mit Vergußmasse ausgefüllt werden. Zur Orientierung ist die Magnetisierung der Permanentmagnete durch Angabe des Nordpols N und Südpols S angegeben. Gemäß einer Variante kann im Zwischenraum 8 ein weiterer Permanentmagnet 3 angeordnet werden (s. Fig. 5b). In Fig. 5c ist schließlich eine Variante dargestellt, bei der die Flußleitstücke 4 und Permanentmagnete 3 wie bei herkömmlichen Transversalflußmaschinen quaderförmig angeordnet sind, wobei allerdings durch einen reduzierten Polbedeckungsfaktor $\alpha$ nicht das maximale Drehmoment der Maschine resultieren kann.

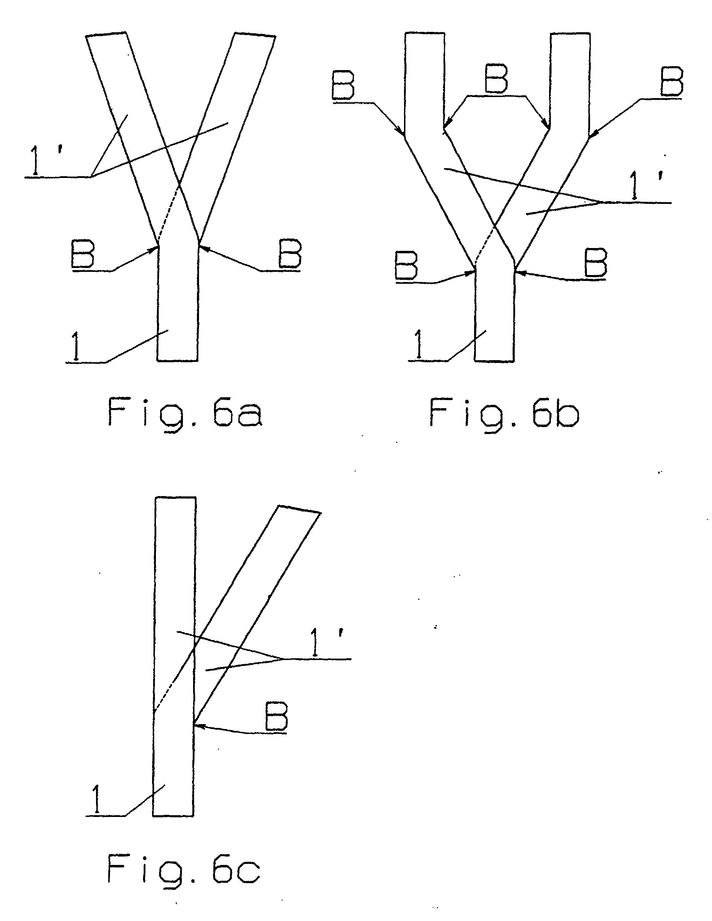

Die Fig. 6a bis 6c erläutern Möglichkeiten der Herstellung der U-Joche durch Biegen. Gemäß Fig. 6a wird jeder Schenkel 1' des U-Jochs 1 nur einmal um eine Biegekante B gebogen. Fig. 6b zeigt eine Variante, bei der jeder Schenkel 1' des U-Jochs 1 zweimal um Biegekanten B gebogen wird. Bei der Variante gemäß Fig. 6c wird nur ein Schenkel 1' des U-Jochs 1 um die Biegekante B gebogen.

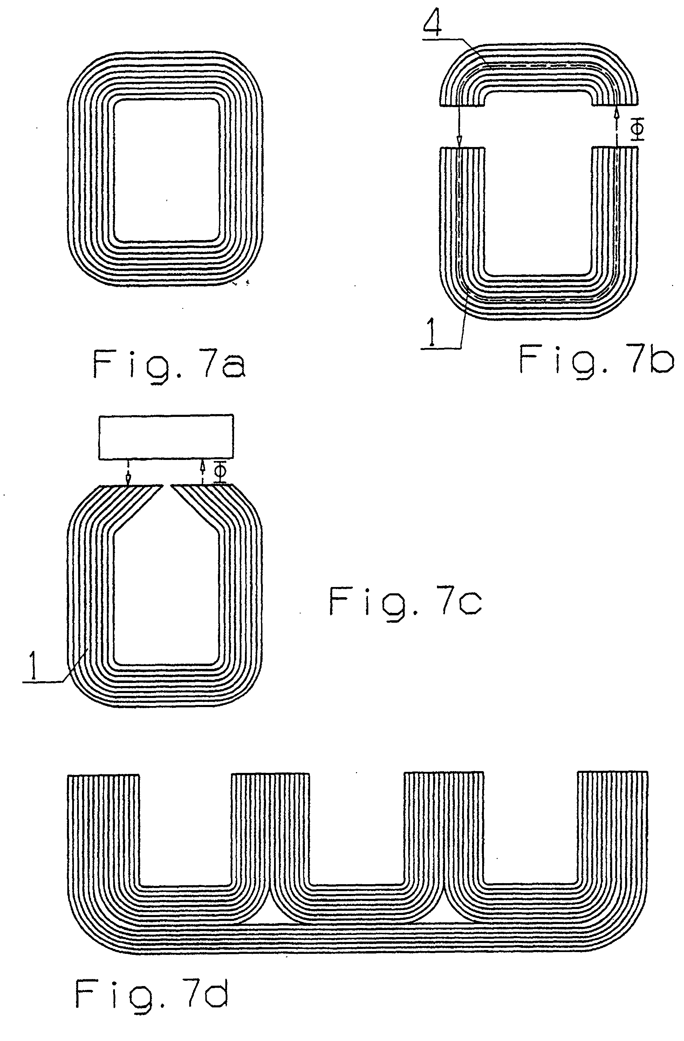

Fig. 7a und 7b zeigen die Ausbildung eines U-Jochs 1 und Flußleitstücks 4 als Schnittbandkern. In diesem Fall wird gemäß Fig. 7a ein bandförmiges, dünnes Material aufgewickelt. Durch Zerschneiden des entstandenen Schnittbandkerns entsteht gemäß Fig. 7b ein U-Joch 1 und ein Flußleitstück 4. Die Texturierung des Schnittbandkernmaterials wird so gewählt, daß die magnetische Vorzugsrichtung in Längsrichtung des Bleches angeordnet ist. Dadurch wird gewährleistet, daß die gewünschte Richtung des magnetischen Flusses $\Phi$ immer mit der magnetischen Vorzugsrichtung übereinstimmt. Die Erfindungsgemäße Versetzung wird entweder durch Biegen des U-Jochs 1 oder des Flußleitstückes 4 bzw. beider zueinander erzielt. Bei der Variante gemäß Fig. 7c wird das U-Joch 1 um einen anders gestalteten Körper gewickelt um nach dem Schneiden des U-Jochs eine Kröpfung der Pole des U-Jochs 1 zu erzielen. Schließlich zeigt Fig. 7d ein U-Joch für eine dreiphasige Maschine, welches durch einen Schnittbandkern hergestellt ist.

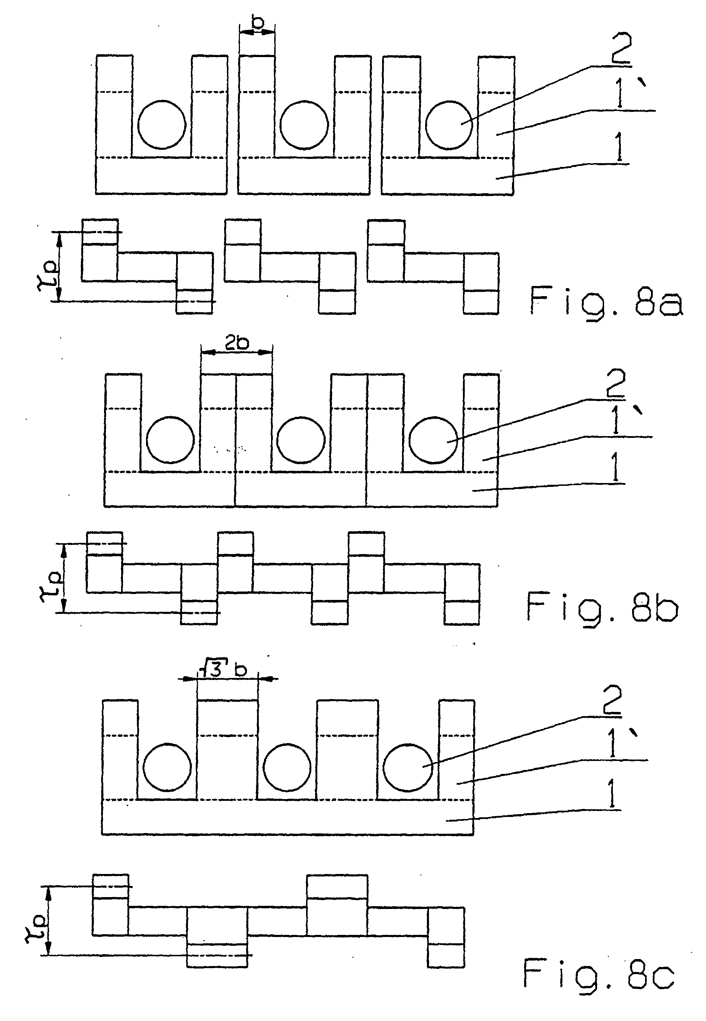

Die Figuren 8a bis 8c zeigen verschiedene Gestaltungsformen der U-Joche 1 einer dreiphasigen erfindungsgemäßen Transversalflußmaschine. Fig. 8a zeigt eine Seitenansicht und eine Draufsicht auf drei gleiche U-Joche 1 und den zwischen den Schenkel 1' der U-Joche angeordneten Ringspulen 2. Die Schenkel 1' der U-Joche 1 haben eine Breite b. Bei der Annahme der Herstellung der U-Joche 1 durch Biegen sind die Biegelinien B angedeutet. Von einer Phase zur anderen müssen die am Rotor angeordneten Permanentmagnete 3 und allfälligen Flußleitstücke 4 um einen Faktor versetzt sein, der dem Verhältnis der doppelten Polteilung $\tau_p$ zur Phasenzahl m entspricht. Im dargestellten Beispiel einer dreiphasigen Maschine ist eine Versetzung jeweils um $2\tau_p/3$ bzw. 120° notwendig. Die Schenkel 1' der U-Joche 1 haben eine Breite b. Bei der Ausführung gemäß Fig. 8b sind die drei einzelnen U-Joche 1 zu einem U-Joch 1 zusammengefaßt, wobei die mittleren Schenkel 1' eine Breite 2b besitzen. Um auf die Ausführungsform gemäß Fig. 8c zu gelangen, wird der mittleren Teil des U-Jochs 1 gespiegelt. In diesem Fall kann die Breite der mittleren Schenkel 1' der U-Joche auf $\sqrt{3} \cdot b$ gegenüber $2 \cdot b$ reduziert werden. Voraussetzung dafür ist weiters, daß die Verschiebung einer Phase zur anderen $\tau_p/m$ ist, also im dargestellten Beispiel $\tau_p/3$ bzw. 60°.

## Patentansprüche

1. Ein- oder mehrphasige Transversalflußmaschine mit am Rotor in Umfangsrichtung angeordneten Permanentmagneten (3) in einer Anzahl entsprechend der Polzahl (p) der Maschine mit allenfalls zwischen den Permanentmagneten (3) angeordneten Flußleitstücken (4), und mit am Stator in Umfangsrichtung aufeinanderfolgend angeordneten U-Jochen (1), **dadurch gekennzeichnet, daß** die Permanentmagnete (3) und die allfälligen Flußleitstücke (4) gegenüber einer zur Drehachse (A) der Maschine parallelen Richtung versetzt orientiert sind.

2. Transversalflußmaschine nach Anspruch 1, **dadurch gekennzeichnet, daß** die U-Joche (1) gegenüber einer zur Drehachse (A) der Maschine parallelen Richtung versetzt orientiert sind.

**3.** Transversalflußmaschine nach Anspruch 1 oder 2, **dadurch gekennzeichnet, daß** die U-Joche (1) und die Permanentmagnete (3) und allfälligen Flußleitstücke (4) zueinander im wesentlichen um eine Polteilung ($\tau_p$) oder ungeradzahlige Vielfache der Polteilung ($\tau_p$) versetzt sind.

**4.** Transversalflußmaschine nach einem der Ansprüche 1 bis 3, da**dadurch gekennzeichnet, daß** die mit dem Stator verbundene Seite der U-Joche (1) parallel zur Drehachse (A) orientiert ist, und daß zumindest ein Schenkel (1') der U-Joche (1) gegenüber dem oder den anderen Schenkel(n) (1') versetzt ist.

**5.** Transversalflußmaschine nach Anspruch 4, **dadurch gekennzeichnet, daß** die Versetzung zumindest eines Schenkels (1') der U-Joche (1) durch Biegen hergestellt wird.

**6.** Transversalflußmaschine nach einem der Ansprüche 1 bis 5, **dadurch gekennzeichnet, daß** die Pole (1") der U-Joche (1) verbreitert als Polschuhe ausgeführt sind.

**7.** Transversalflußmaschine nach einem der Ansprüche 1 bis 6, **dadurch gekennzeichnet, daß** die U-Joche (1) aus Einzelteilen aufaufgebaut sind.

**8.** Transversalflußmaschine nach Anspruch 7, **dadurch gekennzeichnet, daß** die Einzelteile der U-Joche (1) an ihren Berührungsflächen komplementäre, formschlüssige Ausbildungen (9) aufweisen.

**9.** Transversalflußmaschine nach einem der Ansprüche 1 bis 8, **dadurch gekennzeichnet, daß** jeder einem U-Joch (1) gegenüberliegende Permanentmagnet (3) mehrstückig ausgebildet ist, allenfalls mit einem zwischen dem bzw. den Teil(en) des Permanentmagnets (3) angeordneten Zwischenraum (8), welcher dem Zwischenraum zwischen den Polen (1") der U-Joche (1) gegenüberliegt.

**10.** Transversalflußmaschine nach einem der Ansprüche 1 bis 9, **dadurch gekennzeichnet, daß** die Flußleitstücke (4) durch zwei in Richtung der Drehachse (A) orientierte Endstücke (4'), welche durch ein schräges Mittelstück (4") miteinander verbunden sind, ausgebildet sind.

**11.** Transversalflußmaschine nach einem der Ansprüche 1 bis 10, **dadurch gekennzeichnet, daß** im Falle einer mehrphasigen Transversalflußmaschine (Phasenzahl m≥3) die Permanentmagnete (3) und allfälligen Flußleitstücke (4) einer Phase gegenüber der nächsten Phase um $\tau_p/m$ verschoben sind, und daß die Mittelschenkel (1"') der U-Joche (1) eine Breite aufweisen, die um den Faktor $2\sin(\frac{180°}{m})$ breiter ist, als die Breite der außenliegenden Schenkel (1') der U-Joche (1).

**12.** Transversalflußmaschine nach einem der Ansprüche 1 bis 11, **dadurch gekennzeichnet, daß** die U-Joche (1) und allfälligen Flußleitstücke (4) aus weichmagnetischen Verbundwerkstoffen hergestellt sind.

**13.** Transversalflußmaschine nach einem der Ansprüche 1 bis 11, **dadurch gekennzeichnet, daß** die U-Joche (1) und allfälligen Flußleitstücke (4) als Schnittbandkern hergestellt sind.

**Claims**

**1.** A single- or multiple-phase transverse flux machine with permanent magnets (3) arranged on the rotor in peripheral direction and in a number corresponding to the number of poles (p) of the machine, flux conducting pieces (4) possibly being arranged between the permanent magnets (3), and with U-yokes (1) arranged in succession on the stator in peripheral direction, **characterised in that** the permanent magnets (3) and the possibly provided flux conducting pieces (4) are oriented offset relative to a direction that is parallel to the axis of rotation (A) of the machine.

**2.** A transverse flux machine according to claim 1, **characterised in that** the U-yokes (1) are oriented offset relative to a direction that is parallel to the axis of rotation (A) of the machine.

**3.** A transverse flux machine according to claim 1 or 2, **characterised in that** the U-yokes (1) and the permanent magnets (3) and any possibly provided flux conducting pieces (4) are offset relative to each other substantially by a pole pitch ($\tau_p$) or by an uneven numbered multiple of the pole pitch ($\tau_p$).

**4.** A transverse flux machine according to any one of claims 1 to 3, **characterised in that** that side of the U-yokes (1) which is connected to the stator is oriented in parallel to the axis of rotation (A) and that at least one leg (1') of the U-yokes (1) is offset relative to the other leg(s) (1').

**5.** A transverse flux machine according to claim 4, **characterised in that** the offsetting of at least one leg (1') of the U-yokes (1) is produced by bending.

**6.** A transverse flux machine according to any one of claims 1 to 5, **characterised in that** the poles (1'') of the U-yokes (1) are configured broadened as pole shoes.

**7.** A transverse flux machine according to any one of claims 1 to 6, **characterised in that** the U-yokes (1) are assembled of individual parts.

**8.** A transverse flux machine according to claim 7, **characterised in that** the individual parts of the U-yokes (1) have complementary, positive-locking shapings (9) at their contacting faces.

**9.** A transverse flux machine according to any one of claims 1 to 8, **characterised in that** each permanent magnet (3) arranged opposite an U-yoke (1) is configured to have several parts, optionally with a space (8) provided between the part(s) of the permanent magnet (3), which space (8) is located opposite the space between the poles (1'') of the U-yokes (1).

**10.** A transverse flux machine according to any one of claims 1 to 9, **characterised in that** the flux conducting pieces (4) are formed by two end pieces (4') oriented in the direction of the axis of rotation (A), which end pieces (4') are interconnected by an oblique middle piece (4'').

**11.** A transverse flux machine according to any one of claims 1 to 10, **characterised in that** if a multiple-phase transverse flux machine (phase number m≥3) is provided, the permanent magnets (3) and any possibly provided flux conducting pieces (4) of one phase are shifted relative to the next phase by $\tau_p/m$, and that the middle legs (1''') of the U-yokes (1) have a width that is wider by a factor $2\sin(\frac{180°}{m})$ than the width of the externally located legs (1') of the U-yokes (1).

**12.** A transverse flux machine according to any one of claims 1 to 11, **characterised in that** the U-yokes (1) and any possibly provided flux conducting pieces (4) are made of soft-magnetic composite materials.

**13.** A transverse flux machine according to any one of claims 1 to 11, **characterised in that** the U-yokes (1) and any possibly provided flux conducting pieces (4) are produced as laminated core.

**Revendications**

**1.** Machine à flux transversal à une ou plusieurs phases, comportant des aimants permanents (3) disposés sur le rotor dans le sens circonférentiel d'un nombre correspondant au nombre de pôles (p) de la machine, avec éventuellement des éléments de guidage du flux (4) disposés entre les aimants permanents (3), et comportant des culasses en forme de U (1) disposées successivement sur le stator dans le sens circonférentiel, **caractérisée en ce que** les aimants permanents (3) et les éléments de guidage du flux (4) éventuels sont orientés de façon décalée par rapport à une direction parallèle à l'axe de rotation (A) de la machine.

**2.** Machine à flux transversal selon la revendication 1, **caractérisée en ce que** les culasses en forme de U (1) sont orientées de façon décalée par rapport à une direction parallèle à l'axe de rotation (A) de la machine.

**3.** Machine à flux transversal selon la revendication 1 ou 2, **caractérisée en ce que** les culasses en forme de U (1) et les aimants permanents (3) ainsi que les éléments de guidage du flux (4) éventuels sont décalés les uns par rapport aux autres d'un pas polaire ($\tau_p$) ou d'un multiple impair du pas polaire ($\tau_p$).

**4.** Machine à flux transversal selon l'une des revendications 1 à 3, **caractérisée en ce que** la face des culasses en forme de U (1) reliée au stator est orientée parallèlement à l'axe de rotation (A), et **en ce qu'**au moins une branche (1') des culasses en forme de U (1) est décalée par rapport à l'autre ou aux autres branche(s) (1').

**5.** Machine à flux transversal selon la revendication 4, **caractérisée en ce que** le décalage d'au moins une branche (1') des culasses en forme de U (1) est obtenu par flexion.

**6.** Machine à flux transversal selon l'une des revendications 1 à 5, **caractérisée en ce que** les pôles (1") des culasses en forme de U (1) sont élargis en épanouissements polaires.

**7.** Machine à flux transversal selon l'une des revendications 1 à 6, **caractérisée en ce que** les culasses en forme de U (1) sont composées de pièces unitaires.

**8.** Machine à flux transversal selon la revendication 7, **caractérisée en ce que** les pièces unitaires des culasses en forme de U (1) présentent, sur leurs surfaces de contact, des formes (9) complémentaires par complémentarité de forme.

**9.** Machine à flux transversal selon l'une des revendications 1 à 8, **caractérisée en ce que** chaque aimant permanent (3) situé face à une culasse en forme de U (1) est composé de plusieurs pièces, éventuellement avec un espace intermédiaire (8) entre la ou les pièce(s) de l'aimant permanent (3), situé face à l'espace intermédiaire entre les pôles (1") des culasses en forme de U (1).

**10.** Machine à flux transversal selon l'une des revendications 1 à 9, **caractérisée en ce que** les éléments de guidage du flux (4) sont formés par deux pièces d'extrémité (4') orientées dans le sens de l'axe de rotation (A), qui sont reliées l'une à l'autre à l'aide d'une pièce centrale oblique (4").

**11.** Machine à flux transversal selon l'une des revendications 1 à 10, **caractérisée en ce que** dans le cas d'une machine à flux transversal à plusieurs phases (nombre de phases m $\geq$ 3), les aimants permanents (3) et les éléments de guidage du flux (4) éventuels d'une phase sont décalés de $\tau_p$/m par rapport à la phase suivante, et **en ce que** les branches centrales (1''') des culasses en forme de U (1) présentent une largeur qui est plus large du facteur 2sin (180°/m) que la largeur des branches extérieures (1') des culasses en forme de U (1).

**12.** Machine à flux transversal selon l'une des revendications 1 à 11, **caractérisée en ce que** les culasses en forme de U (1) et les éléments de guidage du flux (4) éventuels sont réalisés à partir de matériaux composites magnétiques doux.

**13.** Machine à flux transversal selon l'une des revendications 1 à 11, **caractérisée en ce que** les culasses en forme de U (1) et les éléments de guidage du flux (4) éventuels sont réalisés sous la forme d'un tore fendu enroulé.

Fig. 1a  Fig. 1b  Fig. 1c  Fig. 1d

Fig. 1e  Fig. 1f  Fig. 1g  Fig. 1h

EP 1 005 136 B1

Fig. 2a

Fig. 2b

Fig. 2c

EP 1 005 136 B1

Fig. 3a

1''

1'

2

A

6

4

3

1'

1'

Fig. 3b

Fig. 3c

EP 1 005 136 B1

Fig. 4a

Fig. 4b

Fig. 4c

Fig. 5a

Fig. 5b

Fig. 5c

Fig. 6a

Fig. 6b

Fig. 6c

Fig. 7a

Fig. 7b

Fig. 7c

Fig. 7d

Fig. 8a

Fig. 8b

Fig. 8c